# EUROPÄISCHE PATENTSCHRIFT

(11) **EP 1 859 852 B1**
(45) Veröffentlichungstag und Bekanntmachung des Hinweises auf die Patenterteilung: **14.07.2010**
(21) Anmeldenummer: 07009740.7
(22) Anmeldetag: 16.05.2007
(51) Int. Cl.: B01D 61/14, B01D 69/02, B01D 17/04, C11C 3/00, B01D 67/00, C10L 1/02, C12P 1/00

(54) **Entfernung von hydrophilen Substanzen aus Biodiesel mittels Membranen**
Removal of hydrophile substances from biodiesel using membranes
Elimination de substances hydrophiles de biodiesel à l'aide de membranes

(30) Priorität: 22.05.2006 DE 102006023990
(43) Veröffentlichungstag der Anmeldung: 28.11.2007
(73) Patentinhaber: Chmiel, Horst, 80689 München (DE)
(72) Erfinder: Chmiel, Horst, 80689 München (DE)
(74) Vertreter: Flosdorff, Jürgen

(56) Entgegenhaltungen:
- EP-A1- 1 416 037
- WO-A1-98/45019
- DE-A1- 3 244 007
- DE-A1- 3 712 391
- DE-C1- 4 300 438
- US-A1- 2002 013 486
- US-A1- 2003 072 856
- US-B1- 6 471 869

## Beschreibung

Bei der Erfindung handelt es sich um ein Verfahren zur Separation von Wasser und Glycerin aus biodiesel mittels Membranen.

Im täglichen Leben und in der Produktion treten an vielen Stellen Emulsionen auf. Dabei kann es sich sowohl um lipophile Tröpfchen (z.B. Öle) in Wasser, als auch hydrophile Stoffe (insbesondere Wasser) in einer lipophilen Phase (z.B. Öl) handeln. Das häufigste Beispiel für den erstgenannten Fall sind Öl/Wasser-Emulsionen. Das im Alltag bekannteste Beispiel ist die Milch. Öl bzw. Fett sind im Wasser als so kleine Tröpfchen verteilt, dass diese als stabile Emulsion wie eine homogene Phase erscheint.

Für das "Brechen" derartiger Emulsionen, d.h. das Trennen der lipophilen von der hydrophilen Phase haben sich in der Praxis eine Reihe von Verfahren etabliert. Die bekanntesten Verfahren nutzen die Fliehkraft. Hierzu gehören die Zentrifuge, insbesondere der Tellerseparator, mit dem das Fett von der wässrigen Phase getrennt wird. Investitionen und Energieaufwand hierfür sind allerdings sehr hoch. Für höher konzentrierte und vor allem für durch grenzflächenaktive Stoffe (so genannte Tenside) stabilisierte Emulsionen werden auch thermische Verfahren (z.B. Vakuumverdampfer) eingesetzt. Der Energieaufwand hierfür ist allerdings in der Regel noch höher als bei Fliehkraftabscheidern, was bei steigenden Energiekosten zur Suche nach Alternativen geführt hat.

In den letzten Jahren kommen daher verstärkt Mikrofiltrations- und Ultrafiltrationsmembranen für die Phasentrennung zum Einsatz.

Dabei wird die zu spaltende Emulsion mit einer relativ hohen Geschwindigkeit (ca. 1-3 m/s) tangential an einer porösen Membran entlang geführt. Wählt man den Porendurchmesser so, dass er deutlich kleiner als der kleinste Tröpfchendurchmesser der hydrophilen Phase ist und erzeugt - z.B. mit einer Drossel - einen entsprechenden Druck, so wird die wässrige Phase als Permeat durch die Membranporen gepresst, während die zurückgehaltene hydrophobe Phase aufkonzentriert wird, wodurch die Tröpfchengröße wächst.

Allerdings nimmt bei diesem Verfahren der zur Filtration notwendige Druck und damit der Energieaufwand mit zunehmender Ölkonzentration sehr schnell zu, so dass es bei einem Ölanteil von etwa 20% unwirtschaftlich wird. Es muss also ein Verfahren, wie Zentrifugation oder Verdampfung nachgeschaltet werden.

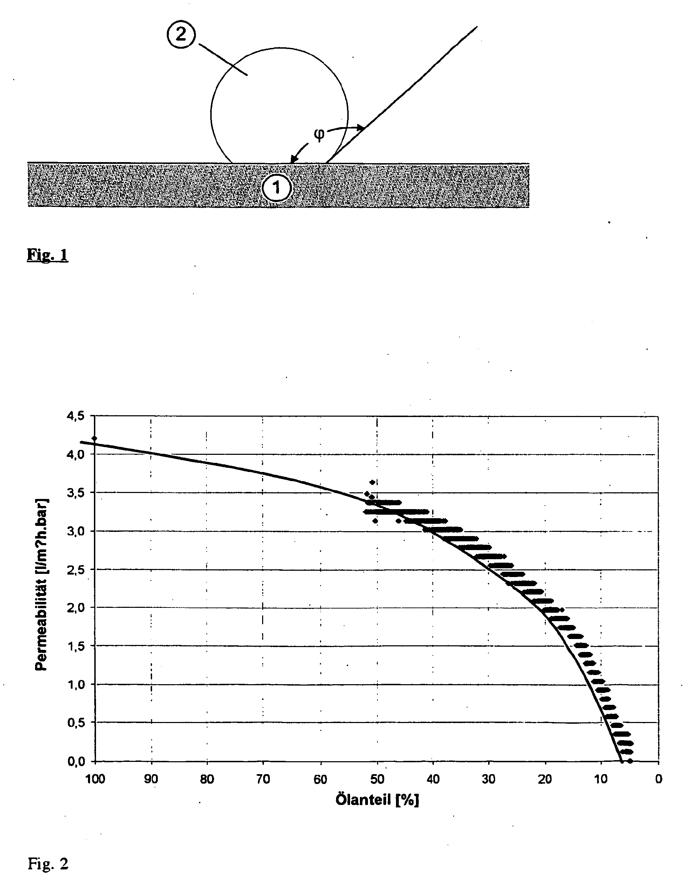

In DE 102 15 802 A1 wird daher vorgeschlagen, den Membranmodul zur Abtrennung der wässrigen Phase einen so genannten Koaleszenzfilter - Koaleszer genannt - nachzuschalten. Unter Koaleszenzfilter wird dabei ein Apparat mit einer sehr großen hydrophoben Oberfläche verstanden. Unter einer hydrophoben Oberfläche soll im Folgenden eine Oberfläche (11) definiert sein, auf der ein Wassertropfen (22) gemäß Figur 1 einen Winkel von ϕ > 90° bildet. Umgekehrt ist für einen Öltropfen bei gleicher Oberfläche ϕ << 90°. Das führt dazu, dass der Öltropfen beim Entlangwandern auf dieser Oberfläche wächst. Ist die Oberfläche eines solchen Koaleszenzfilters ausreichend groß und die Menge an die Emulsion stabilisierenden Tensiden gering, so scheiden sich in einem nach geschalteten "Beruhigungsbecken" die beiden Phasen der Art, dass die hydrophobe Phase auf der wässrigen Phase oben auf schwimmt und geskimmt werden kann.

Die benötigte hydrophobe Oberfläche wird in der Regel durch eine Kugel-, Schwamm- oder Faserstruktur erzeugt. Für die Letztgenannte wird auch gelegentlich der Begriff " Kontaktor" gebraucht.

In der DE 29 00 764 C2 wird ein Verfahren zum Abtrennen von Öl aus einer stabilen, ölhaltigen Emulsion unter Verwendung einer Membran beschrieben, die aus Polymeren bzw. Polymermischungen besteht, die eine kritische Oberflächenspannung von weniger als 35 mN/m. Filtriert man durch solche Membranen Öl-Wasser-Emulsionen, so tritt bevorzugt Öl durch die Membran, während Wasser bevorzugt zurückgehalten wird. Die Selektivität für das jeweilige Öl richtet sich dann nach der sich ergebenden Grenzflächenspannung, ist also dadurch begrenzt.

Auch in der DE 43 00 438 C1 wird ein Verfahren zur Trennung von Öl/Wasser-Gemischen an porösen Membranen in Form eines Crossflow-Moduls beschrieben, wobei der Strömungskanal so ausgebildet ist, dass die eine Seite des Kanals eine hydrophile, die andere eine hydrophobe Membran besitzt, so dass die erstere vorzugsweise Wasser, die zweite vorzugsweise Öl permeieren lässt. Die Selektivität der Membranen ist also ebenfalls sehr begrenzt und hängt von den jeweiligen Komponenten des Öl/Wasser-Gemisches ab.

Im US-Patent US 4,886,603 A wird ein Apparat zur kontinuierlichen Trennung von Wasser plus wasserlöslichen Substanzen von Kohlenwasserstoffen und halogenierten Kohlenwasserstoffen, bei dem nacheinander zunächst über eine Membran, die Wasser bevorzugt hindurchlässt, und anschließend über eine Membran, die Kohlenwasserstoffe bevorzugt hindurchlässt, filtriert wird. Aber auch hier reicht die Selektivität der beiden Membranen nicht aus, um eine vollstandige Trennung, d.h. eine reine wässrige und eine reine Kohlenwasserstoffphase zu erzielen.

In der Veröffentlichung von ORLICH, B: UND SCHOMÄCKER, R. (Die Ultrafiltration von w/o-Mikroemulsionen in der Biokatalyse, Chemie Ingenieur Technik 71 (1999) 156-158) wird von der kontinuierlichen Abrenoung der organischen Phase aus einer in einem Bioreaktor befindlichen Emulsion berichtet, wobei es sich dabei um inverse Mizellen sowie darin befindliche Enzyme handelt. Um die für die Mizellenbildung notwendigen Tenside abzutrennen und wiederzuverwenden, wurde eine Ultrafiltrationsmembran aus Polyamid auf einer porösen Polyethylenfolie mittels den Schritten Konditionieren auf Wasser, Isopropanol, Cyclohexan so eingestellt, dass sie das Tensid durchlässt. Eine besondere Selektivität für eine bestimmte lipophile Phase ist nicht erforderlich.

US 2002/013486 A schlägt eine Membranfiltration zur Reinigung von Fettsäuremethylester von wässriger glycerinhaltiger Phase vor. Ferner wird erwähnt, dass die Wahl der Lipophilie der Membran in Abhängigkeit der gewünschten permeierenden Komponente gewählt wird. Es wird ein Beispiel für eine hydrophobisierte Membran zur Zurückhaltung der glycerinhaltigen Phase offenbart. Ferner liefert die Druckschrift den Hinweis, dass im Querstrom oder Dead-End gearbeitet werden kann. Eine Vorbehandlung der Membran ist nicht offenbart.

Dies ist aber Ziel der vorliegenden Erfindung.

Es ist einleuchtend, dass die eingangs erwähnte Abtrennung der wässrigen Phase mittels tangential angeströmter Mikrofiltrations- und Ultrafiltrationsmembran - das Verfahren wird auch "Cross-Flow Filtration" genannt - bei gleichen Drücken höhere transmembrane Flüsse erlaubt, wenn das Membranmaterial hydrophil ist (d.h. ϕWasser <<90°).

Daher werden hydrophobe Membranmaterialien durch Oberflächenmodifikation hydrophilisiert. Ein Beispiel hierfür sind Polypropylen-Hohlfasermembranen, die vor ihrem ersten Einsatz z.B. in Methanol eingelegt werden. Aber auch wenn sie nicht hydrophilisiert sind, lassen diese Membranen, wenn auch mit geringerer Permeabilität - darunter versteht man den Fluss in Liter pro m², Stunde und bar - Wasser durch.

Überraschend wurde nun festgestellt, dass eine solche hydrophobe Membran, wenn sie zuvor für einige Stunden in Biodiesel gelagert wurde, ausschließlich die lipophile Phase einer Emulsion passieren lässt. Das Wasser wird hingegen vollständig zurück gehalten. Offensichtlich ist dabei die Bedingung ϕ > 90° wichtig.

Bei der Untersuchung, wie die Permeabilität für eine lipophile Phase von der Konzentration im Wasser abhängt, wurde - beispielhaft und nicht erfindungsgemäß für Sonneblumenöl / Wasser gemessen - der in Figur 2 dargestellte Zusammenhang Permeabilität als Funktion des Ölgehalts der Emulsion gefunden.

Man erkennt, dass bei einem Ölanteil in Wasser < 10% - das sind die Konzentrationen der technisch am häufigsten verwendeten Emulsionen - die Permeabilität für Öl außerordentlich gering ist.

Umgekehrt zeigt Figur 2, dass z.B. bei einem Ölanteil > 50% die Permeabilität sehr hoch ist.

Es wurde ein weiterer Effekt gefunden: Auch wenn nur geringe Mengen Wasser - oder allgemeiner hydrophiler Substanzen - in Öl emulgiert sind, werden diese von der hydrophoben Membran - bis auf den gelösten Anteil - vollständig zurück gehalten.

Im folgenden soll dies mit Applikationsbeispielen belegt werden.

### 1. Reinigung von Speiseölen (Vergleichsbeispiel)

Zur Herstellung von pflanzlichen Speiseölen werden die ölhaltigen Früchte oder Samen gepresst und - zur Abtrennung von Feststoffen - grob vorfiltriert. Das Öl ist trüb, wegen der Anwesenheit von Schleimstoffen und Phospholipiden. Diese werden im Raffinationsprozess entfernt. Dabei wird dem Öl eine geringe Menge (2% - 5%) Wasser als Extraktionsmittel zugegeben und es auf 90° C erhitzt. Dabei reichem sich die Schleimstoffe und Phospholipide in Form von Mizellen an der Phasengrenze Öl/Wasser an. Sie wurden bisher durch Zentrifugation abgetrennt.

Es konnte nunmehr gezeigt werden, dass diese wasserlöslichen Stoffe mittels hydrophober Mikro- oder Ultrafiltrationsmembran abgetrennt werden konnten. Überraschend wurde dabei gefunden, dass das Öl bei der Zugabe von Wasser nicht mehr auf 90° C erhitzt werden muss, sondern dass bei Zugabe von geringen Mengen Wasser (ca. 10 - 20%) und intensivem Durchmischen eine Öltemperatur von 35° C ausreicht, um die Schleimstoffe und Phospholipide mittels hydrophober Mikrofiltrations- oder Ultrafiltrations-Membran praktisch vollständig abtrennen.

### 2. Reinigung von Biodiesel (erfindungsgemäßes Beispiel)

Bei der Herstellung von Biodiesel werden die Triglyceride, aus denen natürliche Pflanzenöle bestehen, durch Zugabe von Alkohol (in der Regel Methanol) und eines Katalysators umgewandelt in Fettsäureester (Biodiesel) und Glycerin. Anschließend müssen die Ester vom Glycerin/Wasser getrennt werden. In einem nachfolgenden Produktreinigungsschritt wird nochmals Wasser dem Biodiesel zugemischt und anschließend wieder abgetrennt. Alle Trennschritte werden bisher mittels Dekanter oder Zentrifugen durchgeführt.

Hier gelingt erfindungsgemäß die Abtrennung der Ester vom Glycerin-/Wassergemisch über hydrophobe Membranen.

### 3. Abtrennung lipophiler Produkte aus dem Bioreaktor (Vergleichsbeispiel)

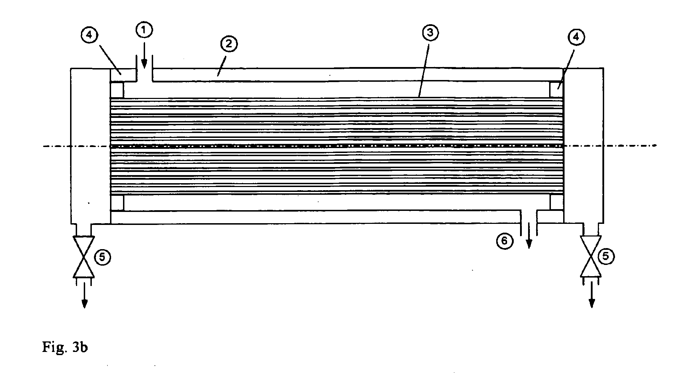

Einige Biokatalysatoren (Enzyme und Mikroorganismen) wandeln lipophile Substrate wiederum in lipophile Produkte um. Um den Mikroorganismen das Substrat zugänglich zu machen, wird es in einer lipophilen Phase gelöst und diese als Emulsion in den Bioreaktor eingetragen. Die Mikroorganismen bzw. Enzyme wandeln das Substrat in ein Produkt um, das wiederum in der lipophilen Phase gelöst wird. Trägt man daher die Emulsion zyklisch aus dem Bioreaktor aus und führt sie gemäß Figur 3b durch einen Mikro- oder Ultrafiltrations-Membranmodul, so wandert die lipophile Phase einschließlich Produkt durch die Poren der hydrophoben Membran. Mittels Extraktion (z.B. überkritische CO₂-Extraktion) kann das Produkt von der lipophilen Phase getrennt und diese wiederum mit Substrat beladen in den Bioreaktor zurückgeführt werden.

Die Konstruktion der Vorrichtung zur erfindungsgemäßen Entfernung von Wasser und Glycerin aus Biodiesel hängt von der Konzentration ab.

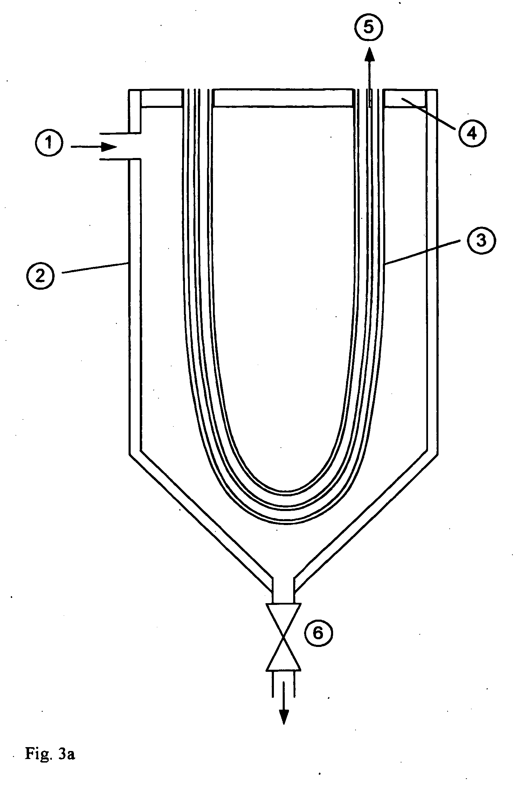

In Figur 3 sind daher zwei Varianten dargestellt.

Für die Entfernung geringer Konzentrationen, wie im Beispiel 1, empfiehlt sich eine Dead End-Filtration und damit eine Vorrichtung gemäß Figur 3a.

Hier tritt die Emulsion über den Einlass (1) in das Modulgehäuse (2), das über eine Platte (4) druckdicht verschlossen ist. Erzeugt man einen Druck, so permeiert die gereinigte lipophile Phase durch die hydrophobe Membran (3). Sie wird über den Auslass (5) ausgetragen. Die von der Membran zurück gehaltene hydrophile Phase, die auch die wasserlöslichen Verunreinigungen enthält, wird über das Ventil (6) aus dem Modul entfernt.

Bei hohen Konzentrationen an Wasser, wie im Beispiel 3 sollte eine Cross Flow-Filtration und damit eine Vorrichtung gemäß Figur 3b gewählt werden.

Die Emulsion tritt wieder bei Einlass (1) in das Modulgehäuse (2), das durch eine druckdichte Platte (4) verschlossen ist. Unter dem sich aufbauenden Druck permeiert die lipophile Phase durch die hydrophobe Membran und wird bei den Auslässen (5) ausgetragen. Die hydrophile Phase einschließlich der Verunreinigungen wird über (6) aus dem Modul entfernt.

Die Durchströmung des Membranmoduls der Gestalt, dass die Emulsion im Außenraum geführt wird und die lipophile Phase die Hohlfasermembran - wie in Figur 3 gezeigt - von Außen nach Innen permeiert, wurde in den vorliegenden Fällen wegen der hohen Viskosität der Emulsion gewählt. Sind Emulsionen und lipophile Phase niedrig viskos oder verwendet man statt Hohlfasern Rohrmembranen (Ø einige mm), dann kann die Durchströmung analog Figur 3b umgekehrt werden, d.h. die Emulsion strömt durch die Rohrmembranen und die lipophile, von Wasser befreite Phase verlässt den Modul über das Gehäuse.

## Patentansprüche

1. Verfahren zur Entfernung von Glycerin und Wasser mittels Separation von Biodiesel aus einer Emulsion bzw. einem Gemisch von Biodiesel und Glycerin und Wasser mittels Mikrofiltrations- oder Ultrafiltrationsmembran,
**dadurch gekennzeichnet,**
**dass** die Emulsion oder das Gemisch über die hydrophobe Membran geleitet wird, wobei Biodiesel durch die Mikrofiltrations- oder Ultrafiltrationsmembran permeiert und Glycerin und Wasser von der Mikrofiltrations- oder Ultrafiltrationsmembran zurück gehalten wird, indem die Mikrofiltrations- oder Ultrafiltrationsmembran vor Inbetriebnahme in Biodiesel gelagert wird.

2. Verfahren gemäß Anspruch 1,
**dadurch gekennzeichnet,**
**dass** die Mikrofiltrations- oder Ultrafiltrationsmembran vor Inbetriebnahme während 0,5 bis 10 Stunden, vorzugsweise während zwei bis sechs Stunden in Biodiesel gelagert wird.

## Claims

1. Process for removing glycerine and water by separating biodiesel from an emulsion or a mixture of biodiesel, glycerine and water by using a microfiltration or an ultrafiltration membrane **characterised in that** the emulsion or the mixture is routed over a hydrophobic membrane whereby biodiesel permeates the microfiltration or ultrafiltration membrane and glycerine and water are retained by the microfiltration or ultrafiltration membrane which has been placed in biodiesel prior to the start of operation.

2. A process according to Claim 1 **characterised in that** the microfiltration or ultrafiltration membrane has been placed in biodiesel for a period ranging from 0.5 to 10 hours, preferably from 2 to 6 hours prior to the start of operation.

## Revendications

1. Procédé de séparation pour éliminer par une membrane de microfiltration ou d'ultrafiltration la glycérine et l'eau du biodiésel, dans une émulsion de biodiésel, de glycérine et d'eau respectivement un mélange de biodiésel, de glycérine et d'eau **caractérisé en ce que** l'émulsion ou le mélange sont dirigés sur la membrane hydrophobe, et où le biodiésel traverse la membrane de micro- ou ultrafiltration alors que la membrane de micro- ou ultrafiltration retient la glycérine et l'eau, la membrane de micro- ou ultrafiltration étant plongée dans du biodiésel avant la mise en marche du procédé.

2. Procédé selon 1, **caractérisé en ce que** la membrane de micro- ou ultrafiltration est plongée dans du biodiésel pendant 0,5 à 10 heures, de préférence pendant deux à six heures avant l'opération.
